# EUROPEAN PATENT APPLICATION

(11) **EP 1 338 659 A1**
(43) Date of publication of application: **27.08.2003**
(21) Application number: 03003222.1
(22) Date of filing: 20.02.2003
(51) Int. Cl.: C21D 9/56, B01D 46/30

(54) **White powder removing device for continuous annealing furnace**

(30) Priority: 22.02.2002 JP 2002046339
(71) Applicant: Chugai Ro Co., Ltd., Osaka-shi, Osaka 550-0003 (JP)
(72) Inventor: Osamura, Akio, Chugai Ro Co., Ltd., Nishi-ku, Osaka-shi, Osaka 550-0003 (JP); Nakagawa, Hiroo, Chugai Ro Co., Ltd., Nishi-ku, Osaka-shi, Osaka 550-0003 (JP)
(74) Representative: Glawe, Delfs, Moll & Partner

(57) **Abstract**

In a continuous annealing furnace 1, which has a furnace main body 2 provided with a heating zone 2a for heating a material 7 to be treated and a cooling zone 2c for cooling the material 7 to be treated and anneals the material 7 to be treated by conveying the material continuously from the heating zone 2a to the cooling zone 2c in the environment of an atmospheric gas G. The atmospheric gas G is took out from the exit side of the heating zone 2a via an atmospheric gas supply duct 22. The gas is supplied to a filter main body 21 stuffed with a filter 29. The white powder W in the atmospheric gas G is removed by making the gas pass through the filter 29. Thereafter, the atmospheric gas G is sent back to the entrance side of the cooling zone 2c via an atmospheric gas return duct 23 by means of a fan 24. Thus, the white powder is removed without stopping the furnace.

## Description

### BACKGROUND OF THE INVENTION

The present invention relates to a white powder removing device for a continuous annealing furnace for subjecting a stainless steel strip to continuous bright annealing.

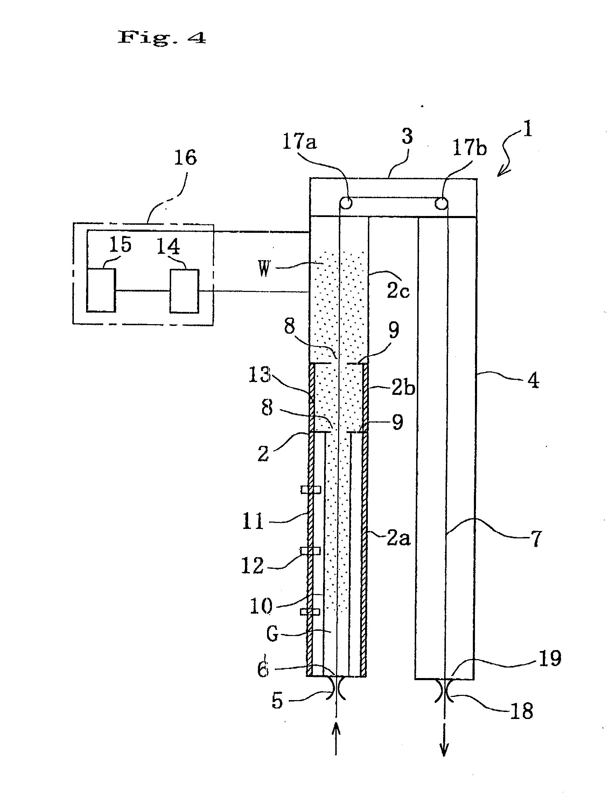

In order to remove stress from a stainless steel strip obtained through cold rolling by performing heat treatment with the same bright surface before the heat treatment, a continuous annealing furnace 1 as shown in Fig. 4 is used. This continuous annealing furnace 1 is constituted of a vertical chamber 2 constructed of a heating zone 2a, a slow cooling zone 2b and a cooling zone 2c, which are arranged in this order from the bottom, a top roll chamber 3, which horizontally extends from the upper end of the vertical chamber 2, and a chute 4, which extends downwardly from an end portion of the top roll chamber 3.

An inlet port 6 having a seal device 5 is provided at the lower end of the vertical chamber 2, and a material 7 to be treated, or a stainless steel strip is introduced from the inlet port 6. A partition wall 9 provided with an aperture 8, through which the material 7 to be treated passes, is provided between the heating zone 2a and the slow cooling zone 2b and between the slow cooling zone 2b and the cooling zone 2c.

The heating zone 2a has a tube 10 through which the material 7 to be treated passes and a furnace wall 11, which is constructed of a refractory material and provided outside the tube 10 with interposition of a space. An atmospheric gas G constituted of hydrogen and nitrogen is enclosed in the tube 10. The furnace wall 11 is provided with an appropriate number of burners 12, and the space between the furnace wall 11 and the tube 10 is controlled at a prescribed temperature (1120°C, for example). With this arrangement, the material 7 to be treated, which is passing through the heating zone 2a, is heat-treated with brightness maintained in the environment of the atmospheric gas, so that the stress is removed. The slow cooling zone 2b has a furnace wall 13 constructed of a refractory material and is internally controlled at a prescribed temperature (450°C, for example) being lower than that of the heating zone 2a. The cooling zone 2c is provided with a cooling unit 16, which takes out the internal atmospheric gas G, cools the gas by means of a cooler 14 and sends the gas back to the cooling zone 2c by means of a fan 15, and is internally controlled at a prescribed temperature (80°C, for example) being lower than that of the slow cooling zone 2b. The material 7 to be treated, which goes out of the heating zone 2a, is gradually cooled by passing through these slow cooling zone 2b and the cooling zone 2c.

The top roll chamber 3 is provided with rolls 17a and 17b for supporting the material 7 to be treated, while an outlet port 19 provided with a seal device 18, is provided at the lower end of the chute 4, so that the material 7 to be treated is discharged from the outlet port 19.

However, in the aforementioned conventional continuous annealing furnace 1, boron contained in the material 7 to be treated and oils and fats adhering on the strip surfaces have sometimes been evaporated as a consequence of the heating of the material 7 to be treated in the heating zone 2a, and the so-called white powder W has been generated. This white powder W has been condensed and deposited by being brought in contact with the heat transfer surface of the cooler 14 of the cooling zone 2c and sometimes caused degradation in heat transfer efficiency. As a result, the cooling effect of the cooler 14 has been reduced, and therefore, it has been required to stop and open the furnace for the cleaning of the cooler 14. Since a mixed gas of hydrogen and nitrogen is used as the atmospheric gas G in this continuous annealing furnace 1, the mixed gas G must be replaced by nitrogen gas in stopping and opening the furnace for the prevention of explosion, and the atmospheric gas G must be charged after the cleaning work of the cooler 14. Therefore, the furnace has been stopped for a long time, and this has led to a problem that the productivity has been degraded and the operating cost has been increased.

There can be considered a method for removing the boron in the material 7 to be treated and the oils and fats on the surfaces to eliminate the generation of the white powder W. However, this method is practically difficult, and the generation of the white powder W cannot be avoided.

### SUMMARY OF THE INVENTION

The present invention has been made in view of the aforementioned conventional problems and has the object of providing a white powder removing device for a continuous annealing furnace, the device being capable of removing the white powder without stopping the furnace.

In order to solve the aforementioned problems, the present invention provides a white powder removing device for a continuous annealing furnace, which has a furnace main body provided with a heating zone for heating a material to be treated and a cooling zone for cooling the material to be treated and anneals the material to be treated by conveying the material continuously from the heating zone to the cooling zone in an environment of an atmospheric gas, the device taking out the atmospheric gas from the exit side of the heating zone via an atmospheric gas supply duct, supplying the gas to a filter main body stuffed with a filter, removing a white powder in the atmospheric gas by making the gas pass through the filter and thereafter sending the atmospheric gas back to the entrance side of the cooling zone via an atmospheric gas return duct by means of a fan.

While the atmospheric gas located on the exit side of the heating zone passes through the filter main body, heat of the atmospheric gas is absorbed by the filter of a large thermal capacity and radiated from the filter main body. By this operation, the temperature of the atmospheric gas is lowered, and the white powder included in the atmospheric gas is condensed and solidified to adhere to the filter. As a result, the atmospheric gas, which has passed through the filter, is sent back to the entrance side of the cooling zone with the white powder removed. Therefore, no white powder adheres to the cooler of the cooling zone, and the cooling effect of the cooler is maintained, reducing the necessity for stopping and opening the furnace.

It is preferable to provide a slow cooling zone between the heating zone and the cooling zone, to connect the atmospheric gas supply duct to the lower portion of the slow cooling zone and to connect the atmospheric gas return duct to the upper portion of the slow cooling zone. The filter should preferably be provided by numbers of ceramic or metallic balls. In concrete, there can be used ceramic of alumina, silica, mullite or the like or metal of a steel ball or the like. The filter, which has a ball-like shape, can therefore be easily washed and reused after being collected.

It is preferable to provide each of the atmospheric gas supply duct and the atmospheric gas return duct with a shutoff valve. With this arrangement, the filters can be replaced during furnace operation by shutting these shutoff valves. In this case, it is preferable to connect the filter supply hopper to the upper portion of the filter main body via the filter supply duct, to connect the filter discharge duct to the lower portion of the filter main body and to provide the filter supply duct and the filter discharge duct with a double shutoff valve that are separated a prescribed interval apart from each other. With this arrangement, the filters can be replaced without opening the filter main body.

It is preferable to provide a cooling unit 'for cooling the atmospheric gas on the entrance side of the fan of the atmospheric gas return duct. With this arrangement, the fan can be protected even when the atmospheric gas temperature is high.

It is preferable to provide a bypass duct that diverges from the atmospheric gas return duct and sends part of the atmospheric gas back to the entrance side of the cooling zone and to provide the bypass duct with a refiner for deoxidation and drying the atmospheric gas. With this arrangement, the material to be treated can be prevented from being oxidized by deoxidation and drying the atmospheric gas by this refiner even when oxygen is included in the atmospheric gas.

It is preferable to provide two sets of the white powder removing devices parallel to the furnace main body. With this arrangement, even when the filter of one white powder removing device is being replaced, the white powder can continuously be removed during furnace operation by using the other white powder removing device.

### BRIEF DESCRIPTION OF THE DRAWINGS

Fig. 1 is a schematic view of a continuous annealing furnace provided with a white powder removing device according to a first embodiment of the present invention;
Fig. 2 is a structural view of the white powder removing device of Fig. 1;
Fig. 3 is a structural view of a white powder removing device according to a second embodiment of the present invention; and
Fig. 4 is a schematic view of a conventional continuous annealing furnace.

### DETAILED DESCRIPTION OF THE PREFERRED EMBODIMENTS

Embodiments of the present invention will be described below with reference to the accompanying drawings.

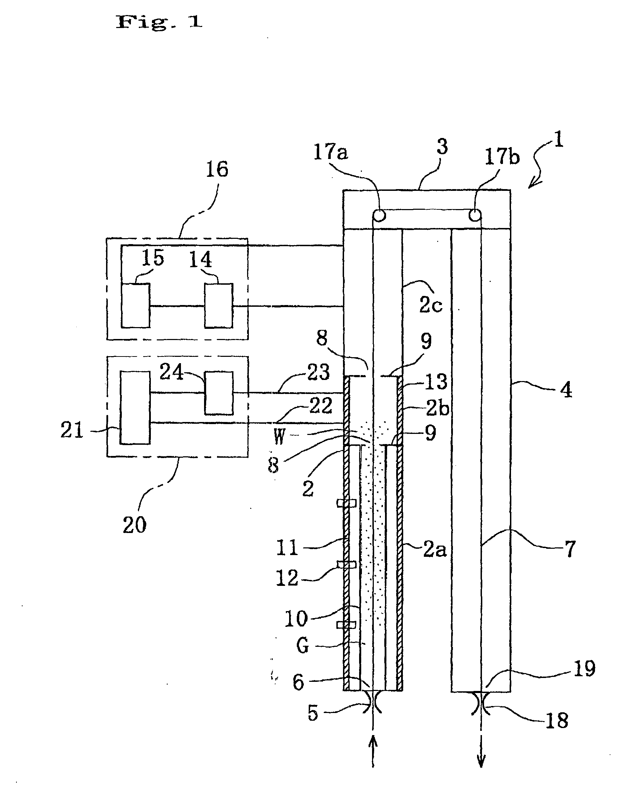

Fig. 1 shows a continuous annealing furnace 1 provided with a white powder removing device 20 according to the first embodiment of the present invention. This continuous annealing furnace 1 is the same as the conventional continuous annealing furnace 1 shown in Fig. 4 except that a white powder removing device 20 is added, and therefore, no description is provided therefor with the corresponding components denoted by same reference numerals.

The white powder removing device 20 is constructed of a filter main body 21, an atmospheric gas supply duct 22 connected between the lower portion of the filter main body 21 and the exit side of a heating zone 2a of a vertical chamber 2, i.e., a lower furnace wall 13 of a slow cooling zone 2b, an atmospheric gas return duct 23 connected between the upper portion of the filter main body 21 and the entrance side of a cooling zone 2c of the vertical chamber 2, i.e., an upper furnace wall 13 of the slow cooling zone 2b, and a fan 24 provided for the atmospheric gas return duct 23.

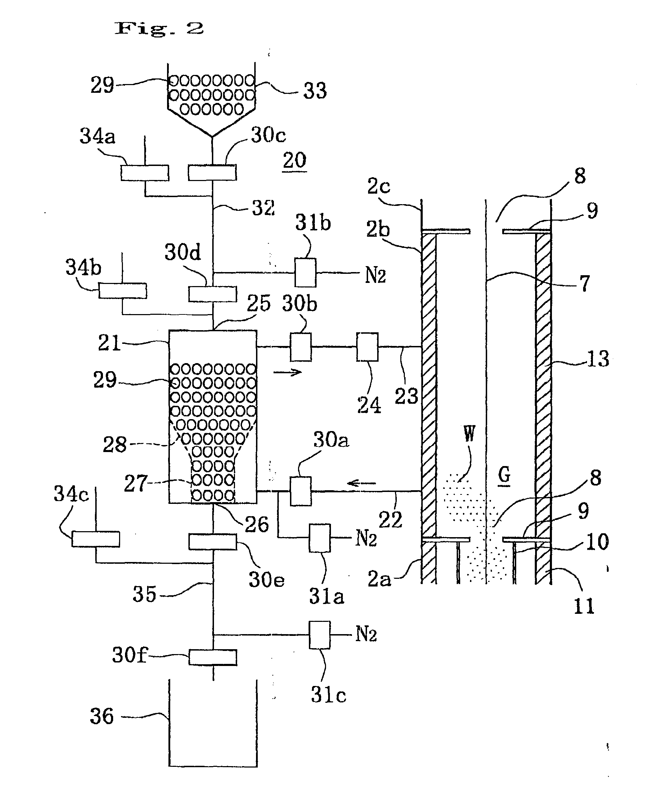

Fig. 2 shows the detail of the white powder removing device. The filter main body 21 has a cylindrical shape of which the upper and lower end portions are closed and has a filter supply port 25 at the upper end and a filter discharge port 26 at the lower end. The filter main body 21 is internally provided with an inner cylinder 27 that communicates with the filter discharge port 26 and a conical support plate 28 that extends from the upper end of the inner cylinder 27 to the inner wall of the filter main body 21. The inner cylinder 27 and the support plate 28 are perforated, and numbers of filters 29 are stuffed inside the inner cylinder 27 and above the support plate 28. The atmospheric gas G is supplied from the atmospheric gas supply duct 22 into a space between the inner cylinder 27 and the filter main body 21 and put through the filters 29 via the perforations of the inner cylinder 27 and the support plate 28.

The filter 29 is constructed of an alumina ball of a diameter of 12 mm. The material of the filter 29 should preferably have a large thermal capacity and is not limited to alumina. The material is also allowed to be ceramic of silica, mullite or the like or metal of a steel ball or the like. Moreover, the filter 29 is not limited to the ball and is also allowed to be a filler of various shapes, such as Raschig ring, Lessing ring, Berl saddle or the like.

The atmospheric gas supply duct 22 is provided with a first shutoff valve 30a, and a nitrogen purge line, which has a first nitrogen shutoff valve 31a, is connected between this first shutoff valve 30a and the filter main body 21. A second shutoff valve 30b is provided between the fan 24 of the atmospheric gas return duct 23 and the furnace wall 13.

A filter supply duct 32 is connected to the filter supply port 25 of the filter main body 21, and a filter supply hopper 33 is connected to the upper end of the filter supply duct 32. The filter supply duct 32 is provided with a third shutoff valve 30c and a fourth shutoff valve 30d, which are separated a prescribed interval apart from each other. The filter supply duct 32 located between the third shutoff valve 30c and the fourth shutoff valve 30d has a capacity of a size capable of accommodating the whole quantity of the filters 29 to be stuffed in the filter main body 21. A nitrogen purge line, which has a second nitrogen shutoff valve 31b, is connected between the third shutoff valve 30c and the fourth shutoff valve 30d. Moreover, lines open to the atmosphere, which have a first atmosphere shutoff valve 34a and a second atmosphere shutoff valve 34b, are connected between the third shutoff valve 30c and the fourth shutoff valve 30d and between the fourth shutoff valve 30d and the filter supply port 25 of the filter main body 21, respectively.

A filter discharge duct 35 is connected to the filter discharge port 26 of the filter main body 21, and a filter collection bucket 36 is arranged below the lower end of the filter discharge duct 35. The filter discharge duct 35 is provided with a fifth shutoff valve 30e and a sixth shutoff valve 30f, which are separated a prescribed interval apart from each other. The filter discharge duct 35 located between the fifth shutoff valve 30e and the sixth shutoff valve 30f has a capacity of a size capable of accommodating the whole quantity of the filters 29 stuffed in the filter main body 21, similarly to the filter supply duct 32. A nitrogen purge line, which has a third nitrogen shutoff valve 31c, and lines open to the atmosphere, which has a third atmosphere shutoff valve 34c, are connected between the fifth shutoff valve 30e and the sixth shutoff valve 30f.

The operation of the white powder removing device 20 constructed as above will be described next.

During the normal operation of the continuous annealing furnace 1, the third shutoff valve 30c, the fourth shutoff valve 3Cd, the fifth shutoff valve 30e and the sixth shutoff valve 30f are shut, and the first shutoff valve 30a and the second shutoff valve 30b are opened with the fan 24 driven. By this operation, the atmospheric gas G in the lower portion of the slow cooling zone 2b of the vertical chamber 2 of the continuous annealing furnace 1 flows into the filter main body 21 through the atmospheric gas supply duct 22 and passes through the filter 29. At this time, heat of the atmospheric gas G is absorbed by the filter 29 and dissipated from the wall surface of the filter main body 21, and therefore, the temperature of the atmospheric gas G is lowered. It has been confirmed that the temperature of the atmospheric gas G has been reduced by about 50°C from the temperature of 450°C before the flow into the filter main body 21 in this case. As a result, the white powder W included in the atmospheric gas G is condensed and solidified to adhere to the filter 29. Therefore, the atmospheric gas G, which has passed through the filter 29, flows out of the filter main body 21 with the white powder W removed and is sent back to the upper portion of the slow cooling zone 2b through the atmospheric gas return duct 23.

As described above, the white powder W is removed by the filter 29 as a consequence of the passing of the atmospheric gas G in the lower portion of the slow cooling zone 2b through the filter 29. Therefore, the white powder W can be reduced to enter the next cooling zone 2c, and there is no concern about the adhesion of the powder to the heat transfer surface of the cooler 14 of Lhe cooling unit 16. Therefore, it is allowed Lo operate the continuous annealing furnace 1 for a long time without stopping the furnace.

When the white powder W is accumulated to some extent on the filLer 29, the filters 29 are replaced. According to this filter replacing work, the fan 24 is first stopped, and the first shutoff valve 30a and the second shutoff valve 30b are shut to interrupt the flow of the atmospheric gas G through the atmospheric gas supply duct 22 and the atmospheric gas return duct 23.

Then, the first nitrogen shutoff valve 31a is opened to purge nitrogen to the filter main body 21, and the second atmosphere shutoff valve 34b is opened at the same time to replace the atmospheric gas G inside the filter main body 21 with nitrogen. After a lapse of a specified time, the first nitrogen shutoff valve 31a and the second atmosphere shutoff valve 34b are shut.

Next, the third nitrogen shutoff valve 31c is opened to purge nitrogen into the filter discharge duct 35, and the third atmosphere shutoff valve 34c is opened at the same time Lo replace the air inside the filter discharge duct 35 with nitrogen. After a lapse of a specified time, the third nitrogen shutoff valve 31c and the third atmosphere shutoff valve 34c are shut.

When the nitrogen purge in the filter discharge duct 35 is thus ended, the fifth shutoff valve 30e is opened, and the filters. 29 inside the filter main body 21 are taken out into the filter discharge duct 35. After a lapse of a specified time, the fifth shutoff valve 30e is shut.

Subsequently, the third shutoff valve 30c is opened, and the filters 29 in the filter supply hopper 33 are taken out into the filter supply duct 32. After a lapse of a specified time, the third shutoff valve 30c is shut.

Then, the second nitrogen shutoff valve 31b is opened to purge nitrogen into the filter supply duct 32, and the first atmosphere shutoff valve 34a is opened at the same time to replace the air inside the filter supply duct 32 with nitrogen. After a lapse of a specified time, the second nitrogen shutoff valve 31b and the first atmosphere shutoff valve 34a are shut.

When the nitrogen purge in the filter supply duct 32 is thus ended, the fourth shutoff valve 30d is opened, and the filters 29 inside the filter supply duct 32 are supplied into the filter main body 21. After a lapse of a specified time, the fourth shutoff valve 30d is shut.

Subsequently, the first nitrogen shutoff valve 31a and the second atmosphere shutoff valve 34b are opened to purge nitrogen into the filter main body 21. After a lapse of a specified time, the first nitrogen shutoff valve 31a and the second atmosphere shutoff valve 34b are shut.

When the nitrogen purge of the filter main body 21 is thus ended, the first shutoff valve 30a and the second shutoff valve 30b are opened, and the fan 24 is driven to supply the atmospheric gas G to the filter main body 21. By this operation, the normal operation can be restarted.

Finally, the sixth shutoff valve 30f is opened, and the filters 29 inside the filter discharge duct 35 are collected into the filter collection bucket 36 and recycled after being appropriately cleaned.

Since the filters 29 in the filter main body 21 can be promptly replaced during the operation of the continuous annealing furnace 1 as described above, the furnace operation is not required to be stopped.

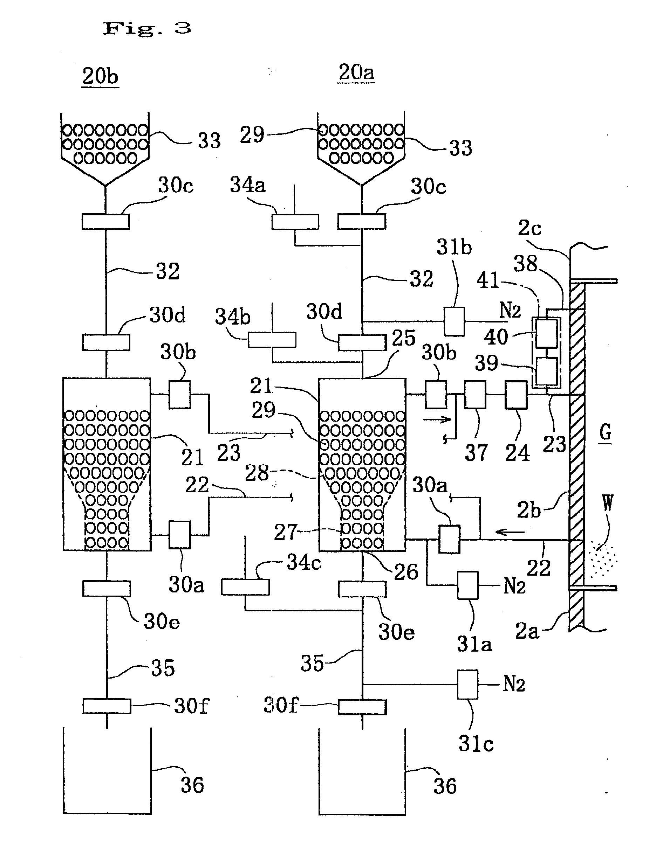

Fig. 3 shows a continuous annealing furnace 1 provided with white powder removing devices 20a and 20b according to the second embodiment of the present invention. This continuous annealing furnace has the first white powder removing device 20a and the second white powder removing device 20b connected parallel to the first white powder removing device 20a. Since the first white powder removing device 20a and the second white powder removing device 20b have the same construction as that of the white powder removing device 20 of the first embodiment except for the following points, no description is provided therefor with the corresponding portions denoted by same reference numerals.

The atmospheric gas supply duct 22 of the second white powder removing device 20b is connected to the upstream side of the first shutoff valve 30a of the atmospheric gas supply duct 22 of the first white powder removing device 20a. Moreover, the atmospheric gas return duct 23 of the second white powder removing device 20b is connected between the second shutoff valve 30b of the atmospheric gas return duct 23 of the first white powder removing device 20a and the fan 24. The nitrogen shutoff valve and the atmosphere shutoff valve of the second white powder removing device 20b are not shown for the sake of simplicity.

The atmospheric gas return duct 23 of the first white powder removing device 20a is provided with a cooler 37 for cooling the atmospheric gas G located on the entrance side of the fan 24. Moreover, a bypass duct 38 for sending part of the atmospheric gas G back to the entrance side of the cooling zone 2c is provided on the exit side of the fan 24, and the bypass duct 38 is provided with a refiner 41 constructed of a deoxidation unit 39 for deoxidizing the atmospheric gas G and a dryer 40 for drying the gas.

In the white powder removing devices 20a and 20b of this second embodiment, the first white powder removing device 20a and the second white powder removing device 20b are arranged parallel to each other. Therefore, either one is operated, and the other is stopped. For example, if the filters 29 become dirty as a consequence of the operation of the first white powder removing device 20a, then the first shutoff valve 30a and the second shutoff valve 30b of the first white powder removing device 20a are shut. Concurrently with the start of the operation of replacing the filters 29, the first shutoff valve 30a and the second shutoff valve 30b of the second white powder removing device 20b are opened, and the second white powder removing device 20b is operated. With this arrangement, by consistently operating either one of the first white powder removing devices 20a and 20b, the white powder W in the atmospheric gas G can be removed anytime.

Moreover, the cooler 37 is provided on the entrance side of the fan 24 in the white powder removing devices 20a and 20b of the second embodiment. Therefore, the atmospheric gas G is cooled by this cooler 37 even when the gas has a high temperature, and the fan 24 can be protected from the high temperature. Furthermore, the refiner 41 is provided for the bypass duct 38 located on the exit side of the tan 24. Therefore, even if oxygen (air) is mixed in the atmospheric gas G, the oxygen can be removed by the deoxidation and drying in the refiner 41, and the material 7 to be treated can be prevented from being oxidized.

In the aforementioned embodiments, the white powder removing device of the present invention is provided in the slow cooling zone located between the heating zone and the cooling zone of the continuous annealing furnace. However, in a continuous annealing furnace having no slow cooling zone, the device can be provided in the lower portion of the cooling zone, or in concrete, below the cooling unit of the cooling zone.

As is apparent from the above description, according to the present invention, the white powder in the atmospheric gas is removed during operation, and therefore, long-time operation can be performed without stopping the furnace.

## Claims

1. A white powder removing device for a continuous annealing furnace, which has a furnace main body provided with a heating zone for heating a material Lo be treated and a cooling zone for cooling the material to be treated and anneals the material to be treated by conveying the material continuously from the heating zone to the cooling zone in an environment of an atmospheric gas, **characterized in that**: the device taking out the atmospheric gas from an exit side of the heating zone via an atmospheric gas supply duct, supplying the gas to a filter main body stuffed with a filter, removing a white powder in the atmospheric gas by making the gas pass through the filter and thereafter sending the atmospheric gas back to an entrance side of the cooling zone via an atmospheric gas return duct by means of a fan.

2. The white powder removing device for a continuous annealing furnace as in claim 1, wherein the device comprising a slow cooling zone provided between the heating zone and the cooling zone, the atmospheric gas supply duct being connected to a lower portion of the slow cooling zone, and the atmospheric gas return duct being connected to an upper portion of the slow cooling zone.

3. The white powder removing device for the continuous annealing furnace as in claim 1, wherein the filter is comprised of numbers of ceramic or metallic balls.

4. The white powder removing device for the continuous annealing furnace as in claim 1, wherein the atmospheric gas supply duct and the atmospheric gas return duct are each provided with a shutoff valve.

5. The white powder removing device for the continuous annealing furnace as in claim 4, wherein a filter supply hopper is connected to an upper portion of the filter main body via a filter supply duct, a filter discharge duct is connected to a lower portion of the filter main body, and the filter supply duct and the filter discharge duct are each provided with a double shutoff valve that are separated a prescribed interval apart from each other.

6. The white powder removing device for the continuous annealing furnace as in claim 1, comprising a cooling unit for cooling the atmospheric gas, the cooling unit being provided on an entrance side of the fan of the atmospheric gas return duct.

7. The white powder removing device for the continuous annealing furnace as in claim 1, comprising a bypass duct that diverges from the atmospheric gas return duct and sends part of the atmospheric gas back to an entrance side of the cooling zone, the bypass duct being provided with a refiner for deoxidation and drying the atmospheric gas.

8. The white powder removing device for the continuous annealing furnacc as in any one of claims 1 to 7, comprising two sets of the white powder removing devices provided parallel to the furnace main body.
